# EUROPÄISCHE PATENTANMELDUNG

(11) **EP 1 069 090 A1**
(43) Veröffentlichungstag der Anmeldung: **17.01.2001**
(21) Anmeldenummer: 00113684.5
(22) Anmeldetag: 28.06.2000
(51) Int. Cl.: C04B 18/24, C04B 28/18

(54) **Faserverstärkter Schaumbeton sowie Verfahren zu seiner Herstellung**

(30) Priorität: 15.07.1999 DE 19933298
(71) Anmelder: Ytong Holding GmbH, 80797 München (DE)
(72) Erfinder: Franke, Joachim, 86529 Schrobenhausen (DE); Malitschenko, Harald, 86561 Rettenbach (DE); Volec, Jan, Dr., 86529 Schrobenhausen (DE)
(74) Vertreter: Patentanwälte Dr. Solf & Zapf

(57) **Zusammenfassung**

Die Erfindung betrifft ein hydrothermalgehärtetes, faserverstärktes Schaumbetonprodukt mit einer Mikrobewehrung, insbesondere in Form von geschnittenen Platten, im wesentlichen aufweisend eine Baustoffmatrix aus im wesentlichen Schaumstrukturporen umgebenenden Feststoffstegen aus Calciumsilikathydratphasen, wobei die Baustoffmatrix Fasern für die Mikrobewehrung aufweist, wobei die Fasern mittels Ultraschall in an sich bekannter Weise aufgeschlossene elementarisierte Flachsfasern sind. Die Erfindung betrifft zudem ein Verfahren zur Herstellung eines faserverstärkten Schaumbetonprodukts.

## Beschreibung

Die Erfindung betrifft einen hydrothermalgehärteten, faserverstärkten Schaumbeton sowie ein Verfahren zu seiner Herstellung.

Die Herstellung hydrothermalgehärteter Schaumbetone wird z.B.: in: Dr.-Ing. Siegfried Reinsdorf, Leichtbeton, Band II, VEB-Verlag für Bauwesen, Berlin 1963, im Kapitel 3 ausführlich beschrieben. Ein besonderes Einsatzgebiet ist die Verwendung von hydrothermalgehärteten Schaumbeton-Produkten, z.B. in Form von Leicht-Dämmplatten, als Wärmedämmaterial anstelle von z.B. Polystyrol-Platten oder Glasfasermatten.

Für diesen Zweck ist es erforderlich, Schaumbeton mit Rohdichten möglichst unter 200 kg/m³ zu erzeugen. Problematisch dabei ist eine ausreichende Strukturfestigkeit zu erzielen, die eine ausreichende Handhabungsfestigkeit und Standfestigkeit am Einbauort gewährleistet.

Bekannt ist aus der DE 43 27 074, die Strukturfestigkeit des als Wärmedämmaterial zu verwendenden Schaumbetons, der üblicherweise durch Anmischen einer Schlempe, die im wesentlichen mindestens ein gebranntes Kalkprodukt und/oder Zement, Quarzmehl und Wasser enthält, und Untermischen eines getrennt davon vorgefertigten Schaums, sowie anschließende Hydrothermalhärtung erzeugt wird, durch Einrührung von Glasfasern in die Schlempe zu erhöhen.

Für das bekannte Verfahren sind besondere Mischaggregate erforderlich, die nach besonderen Mischreihenfolgen und Mischleistungen einzusetzen sind, um eine homogene Verteilung der relativ langen (6 bis 12 mm) Glasfasern und ein schonendes Untermischen des Schaums zu erzielen. Angaben bezüglich der Größe der Erhöhung der Strukturfestigkeit werden in der Druckschrift nicht gemacht. Ebenso werden keine Angaben über Probleme beim Schneiden der angesteiften Körper gemacht. Der Hinweis, daß die gehärteten Platten in einem letzten Verfahrensschritt mit einer Beschichtung versehen werden, verdeutlicht, daß zumindest deren Oberflächengüte mangelhaft ist. Die Oberfläche wird sicherlich durch die Beeinträchtigung beim Schneiden durch die relativ langen Glasfasern ausgefranst und brüchig. Außerdem gewährleisten wegen des alkalischen Milieus im Schaumbeton - wenn überhaupt - allenfalls alkaliresistente Glasfasern eine - und dann auch nur eine begrenzte Zeit lang - eine Erhöhung der Strukturfestigkeit. Alkalirestistente Fasern wiederum sind relativ teuer und verteuern damit das Endprodukt erheblich. Wegen all dieser nachteiligen Effekte ist das faserverstärkte Produkt wohl bis heute noch nicht auf dem Markt erschienen.

In der WO 92/11217 wird über die Verwendbarkeit von kurzen Fasern für eine sogenannte Mikrobewehrung von faserverstärktem Porenbeton berichtet und festgestellt, daß die meisten bekannten Fasern wegen der Autoklav-Bedingungen unbrauchbar oder zu teuer oder gesundheitsschädigend sind. Verwendbar dagegen sollen Fasern aus dem Polymer Polymethylpenthen sein, weil diese Fasern sich im Autoklav-Prozeß inert verhalten. Unter anderem wird vorgeschlagen, die flexiblen Fasern in einer Länge von 2 bis 10 mm zu verwenden, wenn die Produkte geschnitten werden sollen. Die Fasern sollen sich gut dispergieren lassen und eine zufriedenstellende Bindung zwischen Fasern und Matrixmaterial ergeben. Die Fasern werden in Mengen von 0,5 bis 5 Gew.-% zugesetzt. Gegebenenfalls werden die Fasern bei der Herstellung des Porenbetons vorher in Wasser vordispergiert. Die in dieser Druckschrift beschriebenen Produkte sind für eine Verwendung als Leicht-Wärmedämmstoff zu schwer.

Aufgabe der Erfindung ist, ein faserverstärktes mikrobewährtes Schaumbetonbaumaterial zur Verwendung als Leicht-Wärmedämmaterial geringer Rohdichte zu schaffen, das unkompliziert herstellbar ist und dessen Strukturfestigkeit steuerbar erhöht werden kann. Diese Aufgabe wird durch die Merkmale des Anspruchs 1 und 10 gelöst. Vorteilhafte Weiterbildungen der Erfindung werden in den von diesen Ansprüchen abhängigen Unteransprüchen gekennzeichnet.

Der gravierendste Nachteil der bekannten Faserzusätze zu Schaumbetonmassen ist, daß die möglicherweise eintretende Festigkeitserhöhung unkontrollierbar eintritt. Bei gleicher Zusatzmenge und Qualität der Fasern schwanken die Festigkeitswerte in unannehmbarer Weise. Diese Schwankungen beinhalten fast keine Festigkeitssteigerung und gehen bis zu erträglichen Festigkeitserhöhungen. In jedem Fall ist aber eine industrielle Produktion mit gleichbleibender vorbestimmbarer Festigkeitssteigerung nicht erzielbar. Auch aus diesem Grund sind auf dem Markt keine faserverstärkten, mikrobewehrten Schaumbetonprodukte zu finden.

Im Rahmen der Erfindung wurde herausgefunden, daß die Ursache für diese Festigkeitsschwankungen Beeinträchtigungen der Porenstruktur und der Porenform im Schaumbetonprodukt sind, die durch die Fasern verursacht werden. Die Fasern dringen in die Poren ein, verändern ihre Raumform und unkontrollierbar auch deren Größe. Daraus resultieren nicht nur die unkontrollierbar unterschiedlichen Festigkeiten, sondern auch unkontrollierbare Veränderungen anderer gewünschter Eigenschaften, wie z.B. die Wärmedämmung der Schaumbetonprodukte.

Nach der Erfindung werden besondere Fasern von Pflanzenfasern, nämlich elementarisierte Flachsfasern verwendet, die zudem aus einer Vielzahl von Flachsfaser-Sorten ausgewählt sind. Es handelt sich um relativ teuere, ultraschallbehandelte und dadurch elementarisierte Flachsfasern, bei denen die Entfernung der Holzbestandteile und auch anderer unerwünschter Bestandteile der rohen Pflanzenfasern durch Aufschluß der Pflanzenfasern mit einer Ultraschallbehandlung im wässrigen Medium erfolgte. Die Behandlung wird in der Regel mit optimaler Schallintensität und unter Ultraschall-Kavitation ausgeführt. Beschrieben werden solche Fasern z.B. in der WO 90/12906. In dieser Druckschrift werden auch zahlreiche Anwendungsbeispiele für diese Fasern genannt. Die erfindungsgemäße Anwendung ist nicht genannt und auch nicht angedeutet.

Versuche, die im Rahmen der Erfindung durchgeführt wurden, haben ergeben, daß z.B. nach den üblichen Röstverfahren aufgeschlossene Flachsfasern ebenfalls die negativen oben beschriebenen Nachteile der andersartigen bekannten Fasern verursachen. Es ist daher überraschend, daß die Verwendung der ultraschallbehandelten Flachsfasern dazu führt, daß sich die Festigkeitssteigerungen kontrollierbar einstellen und die anderen gewünschten Eigenschaften des Schaumbetons nicht beeinträchtigt werden. Dies beruht wohl im wesentlichen darauf, daß die ultraschallbehandelten Flachsfasern durch die Ultraschallbehandlung eine Affinität zu einem oder mehreren Rohstoffen der Schaumbetonmischung erhalten, die bewirkt, daß sich die Fasern ausschließlich in das Feststoff-Matrixmaterial, das sogenannte Stegmaterial einbetten und nicht in den Porenraum oder die Porenhüllen des Schaumbeton-Matrixmaterials eindringen. Die Porenform und die Porenstruktur, d.h. die Porengröße und die Porenverteilung und damit die gesamte Matrix-Struktur bleiben unverändert. Somit bleiben auch die davon abhängigen anderen Eigenschaften des Schaumbetons unverändert.

Wesentlich ist, daß nunmehr mit steigenden Faserlängen und/oder steigenden Faserzusatzmengen korrelativ die Festigkeit, insbesondere die Biegezugfestigkeit kontrolliert gesteigert werden kann, so daß die industrielle Produktion Schaumprodukte zur Verfügung stellen kann, die hinsichtlich ihrer Qualität gleichbleibend differenzierbar sind.

Erfindungsgemäß werden insbesondere Exakt-Schnittfasern verwendet. Das sind Fasern, die nach speziellen Verfahren auf eine genau vorgegebene Länge geschnitten wurden. Dabei wird ein Faserstrang hergestellt und von diesem dann die Fasern in gewünschter Länge abgeschnitten. Verwendbar sind auch Kurzfasern, die mit der Schneidmühle hergestellt werden. Diese haben eine breitere Längenverteilung mit hohem Anteil zu kurzer Fasern. Auch mit diesen erhält man eine Verstärkung, nur muß man mehr davon einsetzen.

Die Flachsfasern können erfindungsgemäß in einer Länge zwischen 0,1 und 10, insbesondere zwischen 0,5 und 5 mm zum Einsatz kommen. Die Zusatzmengen betragen 0,1 bis 2, insbesondere 0,2 bis 1 Gew.-%, bezogen auf die Trockenstoffeinwaage.

Überraschend ist, daß geringe Fasermengen in relativ kurzen Längen eine derartig erhebliche Erhöhung der Strukturfestigkeit erbringen. Wird die Menge gesteigert, sinken die Festigkeiten unter die Festigkeiten eines Produkts ohne Fasern; werden längere Fasern verwendet, sinken die Festigkeiten ebenfalls gleichermaßen, wobei sich jeweils ein Optimum an Festigkeitssteigerung einstellt. Die Optimumskurven sind derart gestreckt, daß eine Steuerung der Strukturfestigkeit über die Faserlänge bei gleicher Fasermenge und über die Fasermenge bei gleicher Faserlänge möglich ist.

Bevorzugte Rohstoffmischungen setzen sich wie folgt zusammen:

| | Zusammensetzungswerte der hauptsächlichen Mengen | insbesondere Zusatzmengen |
|---|---|---|
| Quarzmehl | 25 bis 40 Gew.-% | 30 bis 35 Gew.-% |
| Kalkhydrat | 15 bis 25 Gew.-% | 18 bis 23 Gew.-% |
| Portlandzement | 25 bis 45 Gew.-% | 30 bis 40 Gew.-% |
| Gips (Halbhydrat) | 3 bis 5 Gew.-% | 3,5 bis 4,5 Gew.-% |
| Mikrosilika als 50-prozentige SiO₂-Suspension | 0 bis 10 Gew.-% | 0 bis 5 Gew.-% |
| Ultraschallbehandelte Flachsfasern | 0,1 bis 2 Gew.-% | 0,2 bis 1,0 Gew.-% |
| Hydrophobierungsmittel | 0 bis 1 Gew.-% | 0 bis 0,8 Gew.-% |
| Schaumbildner | 1 bis 2 Gew.-% | 1,2 bis 1,8 Gew.-% |

Mikrosilica fällt als sogenannter Kieselrauch bei der Ferro-Silicium-Herstellung an. Durch die Zugabe von Mikrosilica wird die Giesstabilität erhöht und die Bildung der CSH-Phasen beschleunigt, da es sich um feinstes amorphes SiO₂ handelt. Mikrosilica fällt bei der Produktion als Suspension an, so daß die Verwendung der Suspension die Vorteile hat, Trocknungskosten einzusparen und gleichzeitig eine bessere Dispergierung gewährleistet.

Die Zugabe von Sulfaten führt zu einer besseren Kristallisation der CSH-Phasen. Sulfat in Form von Halbhydrat wird gewählt, um ein besseres und schnelleres Ansteifen der Masse mit sehr niedrigem Feststoffgehalt zu bekommen.

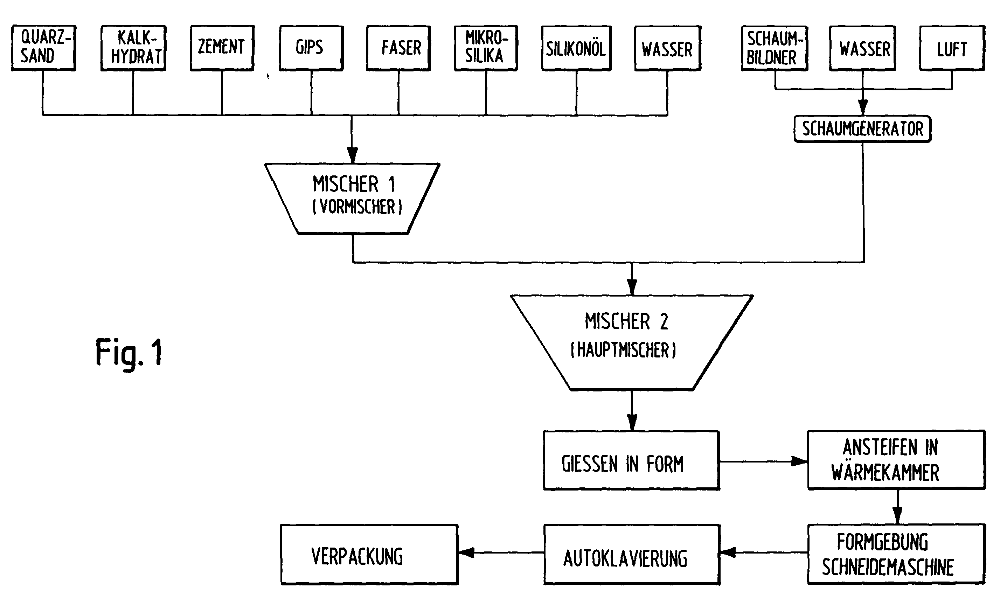

Die Rohstoffe werden zweckmäßigerweise nach dem Verfahrensstammbaum gemäß Fig. 1 verarbeitet. Demnach werden die mineralischen und organischen Rohstoffe zur Herstellung einer Schlempe im Vormischer 1 mit Wasser gemischt. Parallel dazu wird der Schaum im Schaumgenerator hergestellt. In einem Hauptmischer 2 wird die Schlempe mit dem Schaum zu einer gießfähigen Frisch-Schaumbetonmischung gemischt. Dabei ist zweckmäßig, zuerst den Schaum in den Hauptmischer einzufüllen und anschließend die Schlempe zuzugeben. Der Frisch-Schaumbeton wird in Formen gegossen. In einer Wärmekammer läßt man den Frischbeton bei etwa 60 °C ansteifen. Nach dem Ansteifen und Entformen wird geschnitten, autoklaviert und verpackt.

Das Verfahren zur Herstellung des erfindungsgemäßen Schaumbetons ist unproblematisch. Das Endprodukt ist ein Schaumbeton vorbestimmter Rohdichte, insbesondere unter 150 kg/m³, mit erheblich höherer Strukturfestigkeit gegenüber herkömmlichen Schaumbetonprodukten gleicher Rohdichte. Diese erhöhte Strukturfestigkeit resultiert aus der erfindungsgemäßen Mikro-Bewehrung.

Es lassen sich insbesondere Schaumbetonprodukte mit Rohdichten unter 150 kg/m³ bis 80 kg/m³ erzeugen mit Strukturfestigkeiten in diesem Bereich von 0,7 bis 0,3 N/mm² bei Wärmeleitfähigkeiten von λ = 0,04 bis 0,05 W/(mK).

## Patentansprüche

1. Hydrothermalgehärtetes, faserverstärktes Schaumbetonprodukt mit einer Mikrobewehrung, insbesondere in Form von geschnittenen Platten, im wesentlichen aufweisend eine Baustoffmatrix aus im wesentlichen Schaumstrukturporen umgebenenden Feststoffstegen aus Calciumsilikathydratphasen, wobei die Baustoffmatrix Fasern für die Mikrobewehrung aufweist,
**dadurch gekennzeichnet,** daß
die Fasern mittels Ultraschall in an sich bekannter Weise aufgeschlossene elementarisierte Flachsfasern sind.

2. Schaumbetonprodukt nach Anspruch 1,
**dadurch gekennzeichnet,** daß
die Flachsfasern nahezu allesamt in vereinzelter Verteilung im Feststoffstegmaterial vollständig eingebettet sind und nicht in den Porenraum der Poren ragen.

3. Schaumbetonprodukt nach Anspruch 1 und/oder 2,
**dadurch gekennzeichnet,** daß
Feststoffstegmaterial an der Oberfläche der einzelnen Fasern haftet.

4. Schaumbetonprodukt nach einem oder mehreren der Ansprüche 1 bis 3,
**dadurch gekennzeichnet,** daß
die Flachsfasern eine Länge von 0,1 bis 10, insbesondere von 0,5 bis 5 mm aufweisen.

5. Schaumbetonprodukt nach einem oder mehreren der Ansprüche 1 bis 4,
**dadurch gekennzeichnet,** daß
die Flachsfasern eine Dicke von 10 bis 20, insbesondere von 10 bis 15 µm aufweisen.

6. Schaumbetonprodukt nach einem oder mehreren der Ansprüche 1 bis 5,
**dadurch gekennzeichnet,** daß
die Flachsfasern in einer Menge von 0,1 bis 2, insbesondere von 0,2 bis 1 Gew.-% enthalten sind.

7. Schaumbetonprodukt nach einem oder mehreren der Ansprüche 1 bis 6,
**dadurch gekennzeichnet,** daß
die Flachsfasern mittels Exakt-Schnitt hergestellte Flachsfasern sind.

8. Schaumbetonprodukt nach einem oder mehreren der Ansprüche 1 bis 7,
gekennzeichnet durch eine Rohdichte unter 200 kg/m³.

9. Schaumbetonprodukt nach Anspruch 7,
gekennzeichnet durch eine Rohdichte zwischen 150 und 80 kg/m³.

10. Verfahren zur Herstellung eines faserverstärkten Schaumbetonprodukts, insbesondere eines Schaumbetonprodukts nach einem oder mehreren der Ansprüche 1 bis 8,
**dadurch gekennzeichnet,** daß
einer üblichen Schaumbetonmischung, die zumindest Quarzmehl, ein mineralisches Bindemittel wie Kalkhydrat und/oder Zement, Gips und Schaum aufweist sowie Wasser enthält, zur Mikrobewehrung mittels Ultraschall aufgeschlossene Flachsfasern zugesetzt werden.

11. Verfahren nach Anspruch 10,
**dadurch gekennzeichnet,** daß
die Flachsfasern mit Längen von 0,1 bis 10, insbesondere von 0,5 bis 5 mm zugesetzt werden.

12. Verfahren nach Anspruch 10 und/oder 11,
**dadurch gekennzeichnet,** daß
die Flachsfasern mit Dicken von 10 bis 20, insbesondere von 10 bis 15 µm zugesetzt werden.

13. Verfahren nach einem oder mehreren der Ansprüche 10 bis 12,
**dadurch gekennzeichnet,** daß
die Flachsfasern in einer Menge von 0,1 bis 2, insbesondere von 0,2 bis 1 Gew.-% bezogen auf den Feststoffgehalt der Schlempe zugesetzt werden.

14. Verfahren nach einem oder mehreren der Ansprüche 10 bis 13,
**dadurch gekennzeichnet,** daß
zur gesteuerten Festigkeitseinstellung einer bestimmten Schaumbetonmischung Flachsfasern in gleiche Menge, jedoch jeweils mit vorbestimmter unterschiedlicher Länge zugegeben werden.

15. Verfahren nach einem oder mehreren der Ansprüche 10 bis 14,
**dadurch gekennzeichnet,** daß
zur gesteuerten Festigkeitseinstellung einer bestimmten Schaumbetonmischung Flachsfasern gleicher Länge, jedoch in jeweils vorbestimmten unterschiedlichen Mengen zugegeben werden.

16. Verfahren nach einem oder mehreren der Ansprüche 10 bis 15,
**dadurch gekennzeichnet,** daß
mittels Exakt-Schnitt hergestellte Flachsfasern verwendet werden.

17. Verfahren nach einem oder mehreren der Ansprüche 10 bis 16,
**dadurch gekennzeichnet,** daß
die folgende Rohstoffmischung verwendet wird:
| | Zusammensetzungswerte der hauptsächlichen Mengen |
|---|---|
| Quarzmehl | 25 bis 40 Gew.-% |
| Kalkhydrat | 15 bis 25 Gew.-% |
| Portlandzement | 25 bis 45 Gew.-% |
| Gips (Halbhydrat) | 3 bis 5 Gew.-% |
| Mikrosilika als 50-prozentige SiO₂-Suspension | 0 bis 10 Gew.-% |
| Ultraschallbehandelte Flachsfasern | 0,1 bis 2 Gew.-% |
| Hydrophobierungsmittel | 0 bis 1 Gew.-% |
| Schaumbildner | 1 bis 2 Gew.-% |

18. Verfahren nach Anspruch 17,
**dadurch gekennzeichnet,** daß
die folgenden Rohstoffmischungen verwendet werden:
| | insbesondere Zusatzmengen |
|---|---|
| Quarzmehl | 30 bis 35 Gew.-% |
| Kalkhydrat | 18 bis 23 Gew.-% |
| Portlandzement | 30 bis 40 Gew.-% |
| Gips (Halbhydrat) | 3,5 bis 4,5 Gew.-% |
| Mikrosilika als 50-prozentige SiO₂-Suspension | 0 bis 5 Gew.-% |
| Ultraschallbehandelte Flachsfasern | 0,2 bis 1,0 Gew.-% |
| Hydrophobierungsmittel | 0 bis 0,8 Gew.-% |
| Schaumbildner | 1,2 bis 1,8 Gew.-% |

19. Verfahren nach einem oder mehreren der Ansprüche 10 bis 18,
**dadurch gekennzeichnet,** daß
zunächst eine Schlempe aus mineralischen, organischen Rohstoffen in einem Vormischer mit Wasser und parallel dazu der Schaum in einem Schaumgenerator hergestellt werden und danach die Schlempe mit dem Schaum in einem Hauptmischer zu einer gießfähigen Frisch-Schaumbetonmischung zusammengemischt werden.

20. Verfahren nach Anspruch 19,
**dadurch gekennzeichnet,** daß
zuerst der Schaum in den Hauptmischer eingefüllt und anschließend die Schlempe zugegeben wird.

21. Verfahren nach einem oder mehreren der Ansprüche 10 bis 20,
**dadurch gekennzeichnet,** daß
der Frisch-Schaumbeton in Formen gegossen und in einer Wärmekammer bei etwa 60 °C zum Ansteifen gebracht wird, wonach der angesteifte Kuchen entformt, geschnitten, autoklaviert und gegebenenfalls verpackt wird.
